# EUROPEAN PATENT SPECIFICATION

(11) **EP 3 573 799 B1**
(45) Date of publication and mention of the grant of the patent: **28.09.2022**
(21) Application number: 18705838.3
(22) Date of filing: 30.01.2018
(51) Int. Cl.: B28B 23/00, E04C 1/42, F21V 8/00

(54) **TRANSLUCENT OBJECT AND PRODUCTION METHOD FOR PRODUCING A TRANSLUCENT OBJECT**
TRANSLUZENTES OBJEKT UND HERSTELLUNGSVERFAHREN ZUR HERSTELLUNG EINES TRANSLUZIERENDEN OBJEKTS
OBJET TRANSLUCIDE ET PROCÉDÉ DE FABRICATION D'UN TEL OBJET TRANSLUCIDE

(30) Priority: 30.01.2017 CH 1002017
(43) Date of publication of application: 04.12.2019
(73) Proprietor: Lumineo Group SA, 2900 Porrentruy (CH)
(72) Inventor: MOUSSA, Samuel, 2946 Miécourt (CH)
(74) Representative: Bovard SA Neuchâtel
(86) International application number: PCT/EP2018/052274
(87) International publication number: WO 2018/138377

(56) References cited:
- EP-A1- 2 692 960
- EP-A2- 2 179 105
- CN-B- 103 043 994
- DE-A1-102007 035 878

## Description

### Technical Field

The invention relates to a translucent object, for example in the form of a walls, a piece of furniture or a component, and a production method for producing such a translucent object according to the preamble of claims 1 and 8.

### Background art

In the architecture of buildings but also in the case of other structural elements, such as a piece of furniture and other furnishings, emphasis is often placed on light construction, so that they, or at least areas thereof, are made of transparent materials. In buildings, for example, glass blocks or translucent concrete elements have been known for many years, wherein they are installed in walls or roof areas to brighten the interior of the building as a result of their translucency. Moreover, lighting systems are increasingly becoming known wherein lighting fixtures are installed in ceiling or wall areas. This saves space and increases design options.

WO 2003/097954 A1 discloses, for example, components consisting of a cast material such as concrete in which optical fibers are embedded. Light may be directed via the optical fibers from one side of the component to an opposite side, so that the light penetrates the component. The components comprise several layers of optical fibers. For this purpose, a mold is produced in a casting mold by first introducing a layer of cast material and then arranging a layer of parallel optical fibers on the cast material layer. The optical fibers are pressed or vibrated into the cast material layer to cause them to sink. This procedure is repeated until several cast material layers and optical fiber layers are stacked on top of each other to form the mold. Subsequently, the mold is dried and cut to form the desired components. However, this construction of the components only allows limited light translucency and low density of light guides in the components.

DE10 2007 035 878 A1 and EP 2 179 105 disclose further examples of cast objects embedding optical fibers to provide some levels of translucency to usually opaque materials. However, those solutions only allow for ordered arrangements of fibers, which is limiting in terms of design and luminescence achieved through the objects formed accordingly.

It is an object of the present invention to provide a translucent object, in particular a design object for building constructions offering high light translucency and yet high strength to allow flexible design possibilities of the object, and wherein building constructions produced therewith are simple and inexpensive to produce.

### Disclosure of the invention

This object is achieved according to the present invention by a translucent object according to claim 1 and a production method according to claim 11. Advantageous embodiments and various embodiments of the invention will become apparent from the dependent claims.

A translucent object according to the present invention comprises a hardenable cast material and a plurality of optical fibers integrated in the cast material. The optical fibers are arranged in a three-dimensional structural cage formed by a meshwork, wherein the optical fibers pass through mesh of the meshwork such that the ends of said optical fibers protrude sideways out of mesh of the cage and at different points of the object, wherein the cast material envelops the structural cage and the plurality of optical fibers. In this way, the light may be transported from one point on the surface of the object to another point on the surface. Light may thus enter the object at one point and exit the object at another point. The cast material penetrates and envelops the structural cage and the plurality of optical fibers provides the strength of the object.

The three-dimensional structural cage may have any shape, for example, cubic, pyramidal, cylindrical or another three-dimensional shape, depending on the design specifications for the object. The external shape of the object is substantially determined by the three-dimensional shape of the structural cage. The object may itself form a design object, such as a lamp, a decorative item or a piece of furniture, or it may be used as a component in the design of larger structures, such as buildings or larger pieces of furniture.

The optical fibers connect the various viewing sides of the object, so that light enters the object on one side of the viewing side and exits on another viewing side. The viewing sides may be arranged opposite to each other, but may also be arranged in a different relationship, for example at an angle, to each other. The different viewing sides of the object for light entry and exit may also lie on a round or cylindrical surface, so that the light is redirected from one point of the surface to another point. Furthermore, light may be directed from one viewing side as the entry side to a plurality of different exit sides, or distributed over a large area of the surface of the object.

The translucent object according to the invention may be designed in a versatile manner by using this construction approach and is not limited to a cubic shape with light entry and exit at the front and rear.

The cast material used may be conventional hardening building material. However, an ultra high performance concrete (UHPC concrete) is preferably used. A UHCP concrete is a particularly densely packed concrete with high compression and bending strength. Preferably, UHCP concrete having a compressive strength in the range of over 200 N/mm² and a flexural strength in the range of 50 N/mm² is selected.

By using such a cast material, the object obtains a high bending, compression and torsional strength, although optical fibers which could weaken the construction are arranged in its interior. Compared to a lambda concrete, the strength of the object may be increased by up to 10 times by using a UHPC concrete.

An advantageous cast material in the form of a UHCP concrete having a composition of Portland cement, granules, water, charges and aggregates, especially aggregates, has been developed for use with an object according to the present invention. For a cubic meter of concrete as a cast material for an object according to the invention, the following constituents are advantageously used:
- Cement: 400-700 kg, preferably between 450 and 650 kg,
- Water: 100-200 kg, preferably between 120 and 160 kg,
- Sand: 400 - 1200 kg, preferably between 500 and 1000 kg,
- Micro-silica powder: 50-120 kg, preferably between 60 and 100 kg,
- Quartz powder: 30 - 250 kg, preferably between 50 and 200 kg,
- Polypropylene microfibers: 0.3-3.0 kg, preferably between 0.5 and 2.5 kg, and
- Natural resin: 180 - 220 kg, preferably 200 kg.

With a cast material having this composition, high packing density, low porosity and good strength were achieved for the object produced therewith.

In an advantageous embodiment of the translucent object according to the invention, the structural cage forms a matrix structure in which the optical fibers are embedded at two locations at least. In this case, an optical fiber or several optical fibers may be embedded in a mesh of the matrix structure. The optical fibers may be embedded in the matrix structure in an ordered or disordered, i.e. arbitrary arrangement. Advantageously, the structural cage is formed of a meshwork, such as formed of metal mesh of stainless metal, preferably stainless steel, strands still preferably having a diameter of between about 0.5 and 2 mm.

Advantageously, the mesh of the meshwork have a side area of between about 0,5 and 1,5 square centimeter, preferably about 1 square centimeter.

As mentioned above, the structural cage may have a selected shape corresponding to the shape of the desired object. The optical fibers extend through the mesh and protrude beyond the surface of the structural cage at two points at least, so that they are held at two points at least along their length. In principle, it is also possible to interleave two or more cages, so that the optical fibers may be embedded at several points along their length. This is not absolutely necessary for an object according to the invention.

In one embodiment of the translucent object according to the invention, polymeric optical fibers are used as the optical fibers, in particular polymeric polymethyl methacrylate (PMMA) fibers. Such fibers have low light attenuation properties, wherein only small light losses occur during the passage of light through the object. It is advantageous in the object according to the invention to have a concentration of light fibers of at least 20 cores, and preferably between 35 and 50 cores, per square centimeter. As a result, it is not possible to see individual points of light at the light exit side of the object, but rather the object appears to be flatly translucent. Preferably, a fiber density is selected such that the object has a light transmission of at least 75%, preferably 80%.

Furthermore, according to the present invention, a production method is proposed for producing a translucent object of a thermosetting molding material having a plurality of integrated optical fibers. The production process includes the steps outlined below.

First, a structural cage and a plurality of optical fibers are provided as described above. The structural cage is placed in a mold. The mold is advantageously slightly larger than the structural cage, e.g. by about 2 cm. The mold comprises, for example, a base plate, removable side panels and, optionally, a cover plate. The side panels are preferably mounted on the base plate only after the insertion of the light fibers to allow the light fibers to be inserted into the structural cage in a simple manner.

The optical fibers are guided through the structural cage at two different points of the structural cage at least, so that opposite ends of an optical fiber protrude at different points of the structural cage. Preferably, the optical fibers are guided in a straight line through the structural cage. As a result, a high density of optical fibers in the object may be achieved. For simple geometric shapes of the object, the optical fibers are distributed, for example, at right angles to each other in the structural cage. Depending on the design of the object, however, the optical fibers may also be bent or wound. Furthermore, the light fibers may enclose any angle with respect to each other.

After passing the optical fibers through the structural cage, the side panels of the mold may be installed on the base plate. In principle, it is also conceivable for the optical fibers to be laid first in the structural cage and then the structural cage with the optical fibers to be placed in the mold. However, special care must be taken to avoid the optical fibers being damaged.

Once the structural cage with the light fibers is in the mold, the mold is filled with cast material. The cast material used is preferably a UHCP concrete having the above-mentioned composition. When filling the mold, the cast material penetrates and envelops the structural cage and the optical fibers, so that they are integrated in the material. Optionally, the cast material may be compacted and vented by shaking or vibration, if necessary in a vacuum atmosphere to assist venting. Finally, the cast material is hardened to form the solid translucent object. The curing may, for example, be in a polymerization chamber with atomization of water, so that the natural resins also harden. Subsequently, the translucent object is removed from the mold. Should the light entry and exit ends of the optical fibers be covered by the cast material, the object may be post-processed in order to expose the ends and allow light to pass through the optical fibers. The post-processing may, for example, be effected by cutting or grinding.

By using the structural cage, the light fibers may be arranged irregularly in the object. This results in special lighting effects on the object.

In an advantageous variant of the production method according to the invention, the optical fibers may be arranged according to a pre-calculated arrangement within the structural cage. The pre-calculated arrangement is predetermined by a computer unit with a software algorithm for calculating different arrangements of optical fibers. The various arrangements of optical fibers provided by the computer unit may, for example, be based on different requirements for the object or on special customer requests. Accordingly, for example, individual art objects may be produced. The design of the arrangement of the optical fibers may also be determined by a random algorithm, so that arbitrary arrangements may be obtained.

It is also possible to provide the computer unit with a further software algorithm which creates a specific composition for the cast material as a function of the requirements of the object or the predetermined arrangement of the optical fibers.

In preparation for the production of a particular translucent object in accordance with the invention, the computer unit may take into account special requirements and specifications for the finished object when calculating the positioning of the optical fibers in the structural cage and when preparing the composition for the cast material. For example, a required stability or special illumination may be taken into account.

The structural cage is no longer recognizable in the finished translucent object. The light is introduced into the object from one side and distributed via the optical fibers over the surface of the object. However, the structural cage enhances the load carrying capacity of the object, much like a reinforcement.

By using the production method according to the invention, a translucent object may be produced which has comparable physical and mechanical properties to those of a non-translucent object. Furthermore, the light transmission properties may be improved compared to conventional transparent building objects.

### Description of the appended figures

The invention is illustrated below with reference to the figures. The figures are merely illustrative and non-limiting:
- Fig. 1: shows an example of a three-dimensional structural cage,
- Fig. 2: shows the structural cage of Fig. 1 with optical fibers arranged therein, and
- Fig. 3: shows the structural cage from Fig. 2 with optical fibers arranged therein, in a casting mold.

### Description of an embodiment of the invention

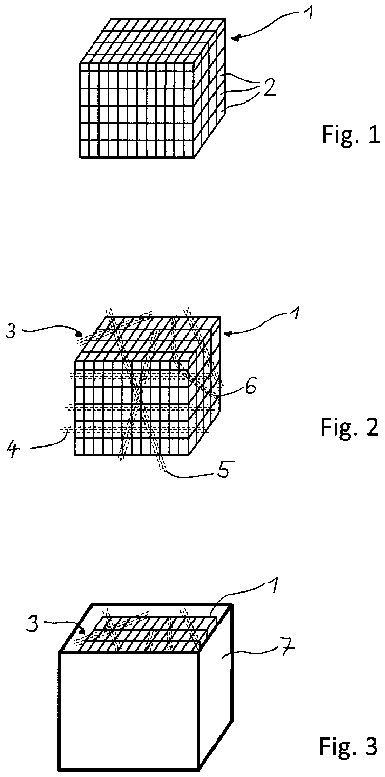

Fig. 1 to 3 represent simplified and schematic individual aspects of the technical properties of a translucent object and its production according to the invention and are not intended to reproduce a real object according to the invention.

Fig. 1 shows a structural cage 1, which, by way of example, has the three-dimensional shape of a cuboid. As mentioned in detail above, a structural cage for an object according to the invention may have any other three-dimensional shape. For the sake of simplicity, the cuboid shape is chosen here. The structural cage 1 consists of a meshwork with a plurality of mesh 2 forming the six sides of the cuboid.

The meshwork is made preferably from stainless steel strands having a diameter of between about 0.5 to 2mm, with a mesh side area of between about 0.5 to 1.5 square centimeter, preferably about 1 square centimeter. It therefore forms a substantially rigid supporting structure for the optical fibers 3, as shown in Fig. 2. The optical fibers 3 are shown in fiber bundles, which, for example, pass through the structural cage 1. In this case, the optical fibers 3 enter on one side of the structural cage 1 and exit on another side, wherein the mesh form support points for the optical fibers. A fiber bundle 4 extends, for example, in the longitudinal direction of the structural cage 1 from a left side to an opposite right side of the structural cage 1. Another fiber bundle 5 extends, for example, diagonally through the structural cage 1 from the lower front right on the underside of the structural cage 1 to a point at the top rear left on the top of the structural cage 1. While another fiber bundle 6 extends in a curved shape from the right side of the structural cage 1 to the upper side. A variety of other possible paths of the fiber bundles in the structural cage are conceivable. The fiber bundles shown are only to be understood as examples. Furthermore, in the production of an object according to the invention, the density of the optical fibers 3 in the structural cage 1 is markedly higher than that shown in Fig. 2, which is intended exclusively to illustrate the principle of the arrangement of optical fibers in the structural cage.

As explained above, a specific arrangement of the optical fibers may be calculated by a computer unit. Automated filling of the structural cage with the optical fibers may then follow. In particular, preferable means to insert the optical fibers 3 in the mesh of the meshwork include a Cartesian robot comprising a disposing tool slidably arranged on an X-Y table piloted by a computer unit to fill the mesh of the meshwork mesh by mesh according to a predetermined pattern. Such pattern is quite easily programmable by an operator in the computer unit given the preferably pitch of the mesh, which is equal to a side of a mesh, i.e. about 1 cm. The robot may advantageously be arranged to move the disposing tool between a fibers reservoir and the meshwork, so as to successively fill said mesh with appropriate amounts of fibers according to said predetermined pattern. According to the invention, preferred densities of fibers per mesh, i.e. per square centimeter, ranges bet 35 and 50 optical fibers 3.

Fig. 3 shows the structural cage 3 with the light fibers 3 embedded therein in a casting mold 7. Preferably, the structural cage 1 is already mounted on a base plate of the mold, and preferably a mat disposed on said base plate of the mold 7 when the optical fibers 3 are passed through the mesh 2, while the side panels are not yet mounted to facilitate the passage of the optical fibers 1. Preferably the mat is made of a material such as rubber or like, preferably soft and smooth material to avoid deterioration of the fibers 3 yet exerting friction against the fibers resting thereon, in order to prevent slippage of fibers on said mat after insertion in the mesh of the meshwork forming the cage.

In Fig. 3, the side panels are then attached to the base plate and the mold may be filled with cast material, preferably consisting of an ultra-high performance concrete. The cast material may for instance have a composition comprising:
- Cement: 400 - 700 kg, preferably between 450 and 650 kg,
- Water: 100 - 200 kg, preferably between 120 and 160 kg,
- Sand: 400 - 1200 kg, preferably between 500 and 1000 kg,
- Micro-silica powder: 50 - 120 kg, preferably between 60 and 100 kg,
- Quartz powder: 30 - 250 kg, preferably between 50 and 200 kg,
- Polypropylene microfibers: 0.3 - 3.0 kg, preferably between 0.5 and 2.5 kg, and
- Natural resin: 180 - 220 kg, preferably 200 kg.

When poured into the mold, the cast material penetrates the structural cage 1 and envelops the optical fibers 3. Upon curing (under room temperature or in accelerated conditions (forced air and temperature for instance), the cast material "freezes" the arrangement and position of fibers in the cage and fixedly binds fibers to the mesh strands, providing a hard translucent concrete material and object.

The sequence of the individual production steps for producing a translucent object according to the invention takes place in accordance with the above description.

### Reference numerals

- 1: Structural cage
- 2: Mesh
- 3: Optical fibers
- 4: Fiber bundle
- 5: Fiber bundle
- 6: Fiber bundle
- 7: Mold

## Claims

1. Translucent object comprising a hardenable cast material and a plurality of optical fibers (3) integrated in the cast material,
**characterized in that**
the optical fibers (3) are arranged in a three-dimensional structural cage (1) formed by a meshwork, wherein the optical fibers (3) pass through the mesh (2) of the meshwork such that the ends of said optical fibers (3) protrude sideways out of the meshwork of the cage and at different points of the object, wherein the cast material envelops the structural cage (1) and the plurality of optical fibers (3).

2. Translucent object according to claim 1, **characterized in that** the cast material is an ultra-high performance concrete.

3. Translucent object according to claim 1 or 2, **characterized in that** the cast material has a composition comprising:
- Cement: 400 - 700 kg, preferably between 450 and 650 kg,
- Water: 100 - 200 kg, preferably between 120 and 160 kg,
- Sand: 400 - 1200 kg, preferably between 500 and 1000 kg,
- Micro-silica powder: 50 - 120 kg, preferably between 60 and 100 kg,
- Quartz powder: 30 - 250 kg, preferably between 50 and 200 kg,
- Polypropylene microfibers: 0.3 - 3.0 kg, preferably between 0.5 and 2.5 kg, and
- Natural resin: 180 - 220 kg, preferably 200 kg.

4. Translucent object according to one of the preceding claims, **characterized in that** the structural cage (1) forms a matrix structure in which the optical fibers (3) are supported at two points at least.

5. Translucent object according to one of the preceding claims, **characterized in that** the mesh (2) of the meshwork have a side area of between about 0,5 and 1,5 square centimeter, preferably about 1 square centimeter.

6. Translucent object according to one of claims 1 to 5, **characterized in that** the structural cage (1) is formed by a stainless steel meshwork, strands of which having a diameter of between about 0.5 and 2 mm.

7. Translucent object according to one of the preceding claims, **characterized in that** the optical fibers (3) are polymeric optical fibers, in particular polymeric optical fibers of polymethyl methacrylate (PMMA).

8. Translucent object according to one of the preceding claims, **characterized in that** there is a concentration of optical fibers (3) in the object of at least 20 cores per square centimeter.

9. Translucent object according to one of the preceding claims, **characterized in that** there is a concentration of optical fibers (3) in the object of between 35 and 50 cores per square centimeter.

10. Translucent object according to one of the preceding claims, **characterized in that** the object has a light transmittance of at least 75%, preferably 80%.

11. Production method for producing a translucent object from a hardenable cast material having a plurality of integrated optical fibers (3) comprising the steps of:
- Arranging a structural cage (1) formed by a meshwork in a casting mold (7),
- Passing a plurality of optical fibers (3) through the meshwork of the structural cage (1) at two different locations of the structural cage (1) at least, so that the ends of the optical fiber (3) protrude at different points sideways out of the meshwork of the structural cage (1),
- Filling the casting mold (7) with hardenable cast material,
- Hardening of the cast material and removal of the cured object from the mold (7).

12. Production method according to claim 11, wherein the optical fibers (3) are arranged irregularly in the structural cage.

13. Production method according to claim 11, wherein a mat is arranged between an internal surface of the mold and the structural cage before the optical fibers (3) are arranged in the mesh of the structural cage.

14. Production method according to claim 13, wherein said mat is made of a material exerting friction against the fibers resting thereon, in order to prevent slippage of fibers on said mat after insertion in the meshwork of the cage.

15. Production method according to claim 11 to 14, wherein the optical fibers (3) are arranged in the mesh of the meshwork forming the structural cage by a Cartesian robot piloted by a computer unit to fill the mesh of the meshwork mesh by mesh.

16. Production method according to claim 15, wherein said robot fills between 35 and 50 optical fibres (3) cores per square centimeter in said mesh.

## Patentansprüche

1. Lichtdurchlässiges Objekt, umfassend ein aushärtbares Gussmaterial und eine Vielzahl von im Gussmaterial integrierten Lichtfasern (3),
**dadurch gekennzeichnet, dass**
die Lichtfasern (3) in einem dreidimensionalen Strukturkäfig (1) angeordnet sind, der aus einem Maschenwerk gebildet ist, wobei die Lichtfasern (3) derart durch die Masche (2) des Maschenwerks verlaufen, dass die Enden der Lichtfasern (3) seitwärts aus dem Maschenwerk des Käfigs und an verschiedenen Stellen des Objekts herausragen, wobei das Gussmaterial den Strukturkäfig (1) und die Vielzahl von Lichtfasern (3) umhüllt.

2. Lichtdurchlässiges Objekt nach Anspruch 1, **dadurch gekennzeichnet, dass** das Gussmaterial ein Ultrahochleistungsbeton ist.

3. Lichtdurchlässiges Objekt nach Anspruch 1 oder 2, **dadurch gekennzeichnet, dass** das Gussmaterial eine Zusammensetzung hat, die Folgendes umfasst:
- Zement: 400-700 kg, vorzugsweise zwischen 450 und 650 kg,
- Wasser: 100-200 kg, vorzugsweise zwischen 120 und 160 kg,
- Sand: 400-1200 kg, vorzugsweise zwischen 500 und 1000 kg,
- Mikro-Siliziumdioxid-Pulver: 50-120 kg, vorzugsweise zwischen 60 und 100 kg,
- Quarzpulver: 30-250 kg, vorzugsweise zwischen 50 und 200 kg,
- Polypropylen-Mikrofasern: 0,3-3,0 kg, vorzugsweise zwischen 0,5 und 2,5 kg,
und
- Naturharz: 180 - 220 kg, vorzugsweise 200 kg.

4. Lichtdurchlässiges Objekt nach einem der vorhergehenden Ansprüche, **dadurch gekennzeichnet, dass** der Strukturkäfig (1) eine Matrixstruktur bildet, in der die Lichtfasern (3) an mindestens zwei Stellen gelagert sind.

5. Lichtdurchlässiges Objekt nach einem der vorhergehenden Ansprüche, **dadurch gekennzeichnet, dass** die Maschen (2) des Maschenwerks eine Seitenfläche zwischen ungefähr 0,5 und 1,5 Quadratzentimetern, vorzugsweise ungefähr 1 Quadratzentimeter, haben.

6. Lichtdurchlässiges Objekt nach einem der Ansprüche 1 bis 5, **dadurch gekennzeichnet, dass** der Strukturkäfig (1) aus einem Maschenwerk aus nichtrostendem Stahl gebildet ist, dessen Drähte einen Durchmesser zwischen ungefähr 0,5 und 2 mm haben.

7. Lichtdurchlässiges Objekt nach einem der vorhergehenden Ansprüche, **dadurch gekennzeichnet, dass** die Lichtfasern (3) polymere Lichtfasern sind, insbesondere polymere Lichtfasern aus Polymethylmethacrylat (PMMA).

8. Lichtdurchlässiges Objekt nach einem der vorhergehenden Ansprüche, **dadurch gekennzeichnet, dass** in dem Objekt eine Konzentration von Lichtfasern (3) von mindestens 20 Kernen pro Quadratzentimeter vorliegt.

9. Lichtdurchlässiges Objekt nach einem der vorhergehenden Ansprüche, **dadurch gekennzeichnet, dass** in dem Objekt eine Konzentration von Lichtfasern (3) von 35 bis 50 Kernen pro Quadratzentimeter vorliegt.

10. Lichtdurchlässiges Objekt nach einem der vorhergehenden Ansprüche, **dadurch gekennzeichnet, dass** das Objekt eine Lichtdurchlässigkeit von mindestens 75%, vorzugsweise 80%, aufweist.

11. Herstellungsverfahren zum Herstellen eines lichtdurchlässigen Objekts aus einem aushärtbaren Gussmaterial mit einer Vielzahl von integrierten Lichtfasern (3), das die folgenden Schritte umfasst:
- Anordnen eines aus einem Maschenwerk gebildeten Strukturkäfigs (1) in einer Gussform (7),
- Durchführen einer Vielzahl von Lichtfasern (3) durch das Maschenwerk des Strukturkäfigs (1) an mindestens zwei verschiedenen Stellen des Strukturkäfigs (1) derart, dass Enden der Lichtfaser (3) an verschiedenen Stellen seitwärts aus dem Maschenwerk des Strukturkäfigs (1) herausragen,
- Befüllen der Gussform (7) mit aushärtbarem Gussmaterial,
- Aushärten des Gussmaterials und Entnehmen des ausgehärteten Objekts aus der Form (7).

12. Herstellungsverfahren nach Anspruch 11, bei dem die Lichtfasern (3) unregelmäßig in dem Strukturkäfig angeordnet werden.

13. Herstellungsverfahren nach Anspruch 11, bei dem eine Matte zwischen einer Innenfläche der Form und dem Strukturkäfig angeordnet wird, bevor die Lichtfasern (3) in den Maschen des Strukturkäfigs angeordnet werden.

14. Herstellungsverfahren nach Anspruch 13, bei dem die Matte aus einem Material besteht, das Reibung gegen die darauf ruhenden Fasern ausübt, um ein Verrutschen von Fasern auf der Matte nach dem Einführen in das Maschenwerk des Käfigs zu verhindern.

15. Herstellungsverfahren nach Anspruch 11 bis 14, bei dem die Lichtfasern (3) von einem kartesischen Roboter, der von einer Computereinheit gesteuert wird, in den Maschen des den Strukturkäfig bildenden Maschenwerks angeordnet werden, um die Maschen des Maschenwerks Masche für Masche zu füllen.

16. Herstellungsverfahren nach Anspruch 15, bei dem der Roboter zwischen 35 und 50 Kerne von Lichtfasern (3) pro Quadratzentimeter in die Maschen füllt.

## Revendications

1. Objet translucide comprenant un matériau de coulée durcissable et une pluralité de fibres optiques (3) intégrées dans le matériau de coulée,
**caractérisé en ce que**
les fibres optiques (3) sont agencées dans une cage structurale tridimensionnelle (1) formée par un grillage, les fibres optiques (3) passant à travers les mailles (2) du grillage de telle sorte que les extrémités desdites fibres optiques (3) font saillie latéralement hors du grillage de la cage et en différents points de l'objet, le matériau de coulée enveloppant la cage structurale (1) et la pluralité de fibres optiques (3).

2. Objet translucide selon la revendication 1, **caractérisé en ce que** le matériau de coulée est un béton à ultra haute performance.

3. Objet translucide selon la revendication 1 ou 2, **caractérisé en ce que** le matériau de coulée présente une composition comprenant :
- du ciment : 400 - 700 kg, préférablement entre 450 et 650 kg,
- de l'eau : 100 - 200 kg, préférablement entre 120 et 160 kg,
- du sable : 400 - 1200 kg, préférablement entre 500 et 1000 kg,
- de la poudre de microsilice : 50 - 120 kg, préférablement entre 60 et 100 kg,
- de la poudre de quartz : 30 - 250 kg, préférablement entre 50 et 200 kg,
- des microfibres de polypropylène : 0,3 - 3,0 kg, préférablement entre 0,5 et 2,5 kg
et
- de la résine naturelle : 180 - 220 kg, préférablement 200 kg.

4. Objet translucide selon l'une quelconque des revendications précédentes, **caractérisé en ce que** la cage structurale (1) forme une structure matricielle dans laquelle les fibres optiques (3) sont supportées en deux points au moins.

5. Objet translucide selon l'une quelconque des revendications précédentes, **caractérisé en ce que** les mailles (2) du grillage présentent une surface latérale comprise entre environ 0,5 et 1,5 centimètre carré, préférablement d'environ 1 centimètre carré.

6. Objet translucide selon l'une quelconque des revendications 1 à 5, **caractérisé en ce que** la cage structurale (1) est formée par un grillage en acier inoxydable dont les brins présentent un diamètre situé entre environ 0,5 et 2 mm.

7. Objet translucide selon l'une quelconque des revendications précédentes, **caractérisé en ce que** les fibres optiques (3) sont des fibres optiques polymères, en particulier des fibres optiques polymères de poly(méthacrylate de méthyle) (PMMA).

8. Objet translucide selon l'une quelconque des revendications précédentes, **caractérisé en ce qu'**il existe une concentration en fibres optiques (3) dans l'objet d'au moins 20 cœurs par centimètre carré.

9. Objet translucide selon l'une quelconque des revendications précédentes, **caractérisé en ce qu'**il existe une concentration en fibres optiques (3) dans l'objet comprise entre 35 et 50 cœurs par centimètre carré.

10. Objet translucide selon l'une quelconque des revendications précédentes, **caractérisé en ce que** l'objet présente une transmittance de lumière d'au moins 75 %, préférablement de 80 %.

11. Procédé de production d'un objet translucide à partir d'un matériau de coulée durcissable présentant une pluralité de fibres optiques intégrées (3) comprenant les étapes de :
- agencement d'une cage structurale (1) formée par un grillage dans un moule de coulée (7),
- passage d'une pluralité de fibres optiques (3) à travers le grillage de la cage structurale (1) en deux emplacements différents de la cage structurale (1) au moins, de telle sorte que les extrémités de la fibre optique (3) font saillie en différents points latéralement hors du grillage de la cage structurale (1),
- remplissage du moule de coulée (7) par un matériau de coulée durcissable,
- durcissement du matériau de coulée et retrait de l'objet durci du moule (7).

12. Procédé de production selon la revendication 11, les fibres optiques (3) étant agencées de manière irrégulière dans la cage structurale.

13. Procédé de production selon la revendication 11, un mat étant agencé entre une surface interne du moule et la cage structurale avant l'agencement des fibres optiques (3) dans les mailles de la cage structurale.

14. Procédé de production selon la revendication 13, ledit mat étant fait d'un matériau exerçant un frottement contre les fibres reposant sur celui-ci, afin d'empêcher le glissement des fibres sur ledit mat après insertion dans le grillage de la cage.

15. Procédé de production selon la revendication 11 à 14, les fibres optiques (3) étant agencées dans les mailles du grillage formant la cage structurale par un robot cartésien piloté par une unité informatique pour remplir les mailles du grillage, maille par maille.

16. Procédé de production selon la revendication 15, ledit robot remplissant entre 35 et 50 cœurs de fibres optiques (3) par centimètre carré dans lesdites mailles.
